(19) **Europäisches Patentamt**

**European Patent Office**

**Office européen des brevets**

(11) **EP 1 497 872 B1**

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(51) Int Cl.$^7$: **H01M 2/16**

(21) Anmeldenummer: 03722418.5

(86) Internationale Anmeldenummer:
**PCT/EP2003/003639**

(22) Anmeldetag: **08.04.2003**

(87) Internationale Veröffentlichungsnummer:
**WO 2003/088380 (23.10.2003 Gazette 2003/43)**

(54) **BATTERIESEPARATOR MIT VERBESSERTER OXIDATIONSSTABILITÄT**

BATTERY SEPARATOR WITH IMPROVED OXIDATION STABILITY

SEPARATEUR D'ACCUMULATEUR PRESENTANT UNE MEILLEURE STABILITE A L'OXYDATION

(84) Benannte Vertragsstaaten:
**DE ES FR GB IT**

(30) Priorität: **12.04.2002 DE 10216418**

(43) Veröffentlichungstag der Anmeldung:
**19.01.2005 Patentblatt 2005/03**

(73) Patentinhaber: **Daramic, LLC**
**Charlotte, NC 28273 (US)**

(72) Erfinder:
• **DEITERS, Jörg**
**22846 Norderstedt (DE)**
• **IHMELS, Klaus, Heinrich**
**22303 Hamburg (DE)**

(74) Vertreter: **UEXKÜLL & STOLBERG**
**Patentanwälte**
**Beselerstrasse 4**
**22607 Hamburg (DE)**

(56) Entgegenhaltungen:
**EP-A- 0 618 629      US-A- 4 778 601**
**US-A- 5 246 798**

**Beschreibung**

Die Erfindung betrifft Separatoren für Blei/Schwefelsäure-Akkumulatoren, im folgenden der Kürze halber Bleiakkumulatoren genannt, die eine verbesserte Oxidationsbeständigkeit aufweisen.

Bei den heute in Bleiakkumulatoren eingesetzten Separatoren handelt es sich meist um gefüllte, mikroporöse Polyolefinseparatoren. Diese sollen einerseits einen direkten Kontakt und damit Kurzschlüsse zwischen den Elektrodenplatten verhindern, andererseits einen ionischen Stromfluß ermöglichen und diesem einen möglichst geringen Widerstand entgegensetzen. Zusammensetzung und Herstellung solcher Separatoren sind an sich bekannt (vgl. z.B. DE-PS 1 267 423, DE-PS 1 298 712, DE-AS 1 496 123, DE-OS 35 45 615, DE-PS 35 40 718 und DE-PS 36 17 318).

Gemäß US 3,351,495 wird hierzu eine homogene Mischung aus Polyolefin, Füllstoff, Weichmacher und Additiven gebildet und diese zu einer bahnförmigen Schicht geformt. Anschließend werden der Weichmacher und Füllstoffe zumindest teilweise durch Extraktion entfernt. Als Weichmacher werden Polyethylenglykol, Glycerin und insbesondere Mineralöl verwendet. Zur Verhinderung eines oxidativen Abbaus des Polyolefins bei der Extrusion können die Separatoren darüber hinaus Antioxidationsmittel, wie 4,4-Thio-bis-(6-tert-butyl-m-kresol) und 2,6-Di-tert-butyl-4-methylphenol enthalten.

Während des Gebrauchs müssen die Separatoren nicht nur der aggressiven Batteriesäure widerstehen sondern sind darüber hinaus besonders im Bereich der positiven Platte oxidativen Angriffen ausgesetzt, beispielsweise durch hoch oxidatives Bleidioxid und die Bildung von extrem reaktiven nascierenden Sauerstoff und Peroxiden. Hinzu kommt, daß Bleiakkumulatoren immer höheren Umgebungstemperaturen und Zyklenbelastungen ausgesetzt werden, wodurch der oxidative Angriff noch verstärkt wird.

Das zur Produktion der Separatoren häufig eingesetzte Polyethylen verleiht den Separatoren in Verbindung mit geringen Mengen Antioxidans und einer größeren Menge Öl zwar eine gewisse Oxidationsstabilität gegenüber dem aggressiven Medium der Batterie, dennoch kann das Separatormaterial unter erschwerten Einsatzbedingungen langsam oxidativ angegriffen und letztlich zerstört werden, was eine Verschlechterung der mechanischen Stabilität des Separators und die Bildung von Rissen und Löchern zur Folge hat und im ungünstigsten Fall durch Kurzschlüsse die Batterielebensdauer verkürzt.

Zur Verbesserung der Oxidationsstabilität von Batterieseparatoren sind zahlreiche Maßnahmen bekannt. Beispielsweise kann durch eine Erhöhung der Separatordicke, des Molekulargewichts des zur Herstellung des Separators verwendeten Polymers oder eine signifikante Erhöhung des Polymergehalts des Separator der oxidative Abbau des Separators verzögert werden.

Eine Vergrößerung der Separatordicke führt jedoch zu deutlich höheren Herstellungskosten und höheren elektrischen Widerständen. Das zur Herstellung von Separatoren üblicherweise verwendete ultrahochmolekulare Polyethylen (UHMWPE) weist zudem in der Regel schon ein Molekulargewicht von 5 - 7 x $10^6$ g/mol auf und eine weitere Erhöhung des Molekulargewichts würde zu erheblichen Prozeßproblemen führen. Außerdem sind kommerziell zwar UHMWPE Typen mit einem Molekulargewicht bis zu etwa 10 x $10^6$ g/mol erhältlich, jedoch werden die Polymerketten dieser UHMWPE Typen bei der Extrusion durch Scherung im Extruder stark abgebaut, wodurch das Molekulargewicht wieder erheblich reduziert wird. Eine Erhöhung des Polymergehalts verschlechtert signifikant die Benetzbarkeit und die Porosität und damit den elektrischen Widerstand des Separators.

Aus dem Stand der Technik ist es auch bekannt, daß die zur Herstellung der Batterieseparatoren verwendeten Prozeßöle die Oxidationsbeständigkeit der Separatoren verbessern können. Der maximale Ölgehalt der Separatoren ist jedoch beschränkt, da auch durch das Öl die Benetzbarkeit und die Porosität des Separators verschlechtert werden.

Die DE 30 04 659 C2 offenbart Separatoren, die Öle mit einem Aromatengehalt von mindestens 40% enthalten. Diese Öle bewirken aufgrund ihrer Zusammensetzung eine Verbesserung der Oxidationsbeständigkeit der Separatoren. Prozeßöle mit hohem Aromatengehalt können jedoch die Bildung von dunklen, häufig klebrigen Ablagerungen im Bleiakkumulator begünstigen, welche die Innen-und Außenseite des Akkumulatorgehäuses verschmutzen und die Ventilsysteme verstopfen können.

Die Vermeidung solcher Ablagerungen ist Gegenstand der DE 39 22 160 A1, die hierzu die Verwendung von Tensiden, vorzugsweise vom Amid- oder Amintyp offenbart.

Die JP 02155161 A offenbart die Verwendung einer Kombination aus paraffinischem Öl, Antioxidans und einem Peroxidzerstörer auf Basis von Phosphorsäure zur Verbesserung der Oxidationsstabilität von Batterieseparatoren bei hohen Temperaturen. Hierdurch wird jedoch kein Schutz vor der oxidierenden Wirkung von nascierendem Sauerstoff oder des Bleidioxids der positiven Elektrodenplatte erzielt.

Die JP 07130348 A offenbart Separatoren, die Mineralöl in Kombination mit einem Phenolharz enthalten.

Zur Verbesserung der Oxidationsstabilität von Taschenseparatoren wird in der US 5,384,211 und der JP 10031992 A eine Erhöhung des Ölgehalts in der Faltenkante und entlang der Verschweißungskante vorgeschlagen.

Die JP 08203493 A offenbart das Beschichten der Kanten von Separatoren mit einem isolierenden Harz, um den oxidativen Angriff zu unterdrücken.

Die JP 2000133239 A beschreibt das Beschichten des oberen Teils des Separators, der im Kontakt mit dem Rahmen und der Elektrodenfahne der positiven Platte steht, mit einem Schmelzklebstoff.

Die Herstellung der obigen Separatoren kann mit der heutigen Technik nicht kontinuierlich erfolgen und ist damit aufwendig und teuer. Außerdem wird nur eine partielle Verbesserung der Oxidationsstabilität erzielt.

Es ist üblich, Separatoren zumindest einseitig mit Längsrippen zu versehen, um einen direkten Kontakt des Separatorblatts mit der positiven Elektrodenplatte und damit eine vorzeitige oxidative Zerstörung zu verhindern.

Die JP 04167356 A und die JP 2000182593 A offenbaren Separatoren, die zusätzliche Rippen im Bereich der Verschweißungskanten der Separatoren aufweisen, um die Bildung von Rissen durch Oxidation in diesem Bereich gezielt zu verhindern.

Die JP 09097601 A offenbart auf besondere Art profilierte Separatoren, die das an der positiven Platte entstehende Gas schneller entweichen lassen und damit dessen oxidierende Wirkung auf den Separator reduzieren sollen.

Die JP 04190554 A beschreibt den Zusatz von Glasfasern zu dem Separatormaterial, um eine Verschlechterung der mechanischen Eigenschaften des Separators durch Oxidation zu verzögern. Das Einbringen von Glasfasern in den Separator durch Extrusion ist jedoch schwierig, da Glasfasern einerseits nur schwer in dem Separatormaterial dispergierbar sind und andererseits während der Extrusion leicht brechen und die Extrudersiebe verstopfen. Zudem sind glasfaserhaltige Separatoren wenig flexibel und neigen bei mechanischer Belastung zum Brechen.

Trotz erheblicher Bemühungen kann keine der bisherigen Maßnahmen zur Verbesserung der Oxidationsbeständigkeit von Batterieseparatoren in jeder Hinsicht befriedigen.

Aus der US 4,024,323 sind Batterieseparatoren bekannt, bei denen mindestens 40 % des zur Herstellung von Separatoren verwendeten ultrahochmolekularen Polyethylens durch ein Copolymer aus einem Olefin und (Meth) acrylsäure oder ein Gemisch aus einem Polyolefin mit niedrigem Molekulargewicht und einem Polymer von (Meth) acrylsäure ersetzt sind. Hierdurch soll die Extrusionsgeschwindigkeit erhöht und die Einbindung des Füllstoffs in das Polymer verbessert werden. Der Austausch von mindestens 40 % des ultrahochmolekularen Polyethylen durch niedermolekulare Polymere ist jedoch nachteilig, da er zu einer Verschlechterung der mechanischen Eigenschaften des Separators führt.

Der Erfindung liegt die Aufgabe zugrunde, Batterieseparatoren mit hoher Oxidationsstabilität zur Verfügung zu stellen, die einfach und kostengünstig herzustellen und die vollflächig gegen Oxidation geschützt sind.

Erfindungsgemäß wird diese Aufgabe durch Batterieseparatoren gelöst, die eine Verbindung mit der Formel (I)

$$R(OR^1)_n \, (COOM^{x+}_{1/x})_m \qquad\qquad\qquad (I)$$

enthalten, in der

R    ein nicht-aromatischer Kohlenwasserstoffrest mit 10 bis 4200 Kohlenstoffatomen, vorzugsweise 13 bis 4200 ist, der durch Sauerstoffatome unterbrochen sein kann,

$R^1$    H, $-(CH_2)_k COOM^{x+}_{1/x}$ oder $-(CH_2)_k-SO_3M^{x+}_{1/x}$, vorzugsweise H ist, wobei k 1 oder 2 ist,

M    ein Alkali- oder Erdalkalimetallion, $H^+$ oder $NH_4^+$ ist, wobei nicht alle Variablen M gleichzeitig die Bedeutung $H^+$ haben,

n    0 oder 1 ist,

m    0 oder eine ganze Zahl von 10 bis 1400 ist und

x    1 oder 2 ist,

wobei das Verhältnis von Sauerstoffatomen zu Kohlenstoffatomen in der Verbindung gemäß Formel (I) im Bereich von 1:1,5 bis 1:30 liegt und wobei n und m nicht gleichzeitig null sein können. Vorzugsweise ist jedoch nur eine der Variablen n und m von null verschieden.

Unter nicht-aromatischen Kohlenwasserstoffresten werden Reste verstanden, die keine aromatischen Gruppen enthalten oder selbst eine solche darstellen. Die Kohlenwasserstoffreste können durch Sauerstoffatome unterbrochen sein, d.h. eine oder mehrere Ethergruppen enthalten.

R ist vorzugsweise ein geradkettiger oder verzweigter aliphatischer Kohlenwasserstoffrest, der durch Sauerstoffatome unterbrochen sein kann. Ganz besonders bevorzugt sind gesättigte, unvernetzte Kohlenwasserstoffreste.

Es wurde überraschend gefunden, daß durch die Verwendung der Verbindungen der Formel (I) zur Herstellung von Batterieseparatoren diese wirksam gegen oxidative Zerstörung geschützt werden können.

Bevorzugt sind Batterieseparatoren die eine Verbindung gemäß der Formel (I) enthalten, in der

R    ein Kohlenwasserstoffrest mit 10 bis 180, vorzugsweise 12 bis 75 und ganz besonders bevorzugt 14 bis 40 Kohlenstoffatomen, der durch 1 bis 60, vorzugsweise 1 bis 20 und ganz besonders bevorzugt 1 bis 8 Sauerstoffatome unterbrochen sein kann, besonders bevorzugt ein Kohlenwasserstoffrest der Formel $R^2$-[$(OC_2H_4)_p$ $(OC_3H_6)_q$]- ist, in der

$R^2$    ein Alkylrest mit 10 bis 30 Kohlenstoffatomen, vorzugsweise 12 bis 25, besonders bevorzugt 14 bis 20 Kohlenstoffatomen ist,

p    eine ganze Zahl von 0 bis 30, vorzugsweise 0 bis 10, besonders bevorzugt 0 bis 4 ist und

q    eine ganze Zahl von 0 bis 30, vorzugsweise 0 bis 10, besonders bevorzugt 0 bis 4 ist, wobei solche Verbindungen besonders bevorzugt sind, bei denen die Summe von p und q 0 bis 10, insbesondere 0 bis 4 ist,

n    1 ist und

m    0 ist.

Die Formel $R^2$-[$(OC_2H_4)_p$ $(OC_3H_6)_q$]- ist so zu verstehen, daß auch solche Verbindungen erfaßt werden, bei denen die Reihenfolge der in eckigen Klammern stehenden Gruppen von der gezeigten abweicht. Beispielsweise sind erfindungsgemäß Verbindungen geeignet, bei denen der in Klammern stehende Rest durch alternierende $(OC_2H_4)$- und $(OC_3H_6)$-Gruppen gebildet wird.

Als besonders vorteilhaft haben sich Additive erwiesen bei denen $R^2$ ein geradkettiger oder verzweiger Alkylrest mit 10 bis 20, vorzugsweise 14 bis 18 Kohlenstoffatomen ist. $OC_2H_4$ steht vorzugsweise für $OCH_2CH_2$, $OC_3H_6$ für $OCH(CH_3)CH_2$ und/oder $OCH_2CH(CH_3)$.

Als bevorzugte Additive sind insbesondere Alkohole (p=q=0; m=0), wobei primäre Alkohole besonders bevorzugt sind, Fettalkoholethoxylate (p=1 bis 4, q=0), Fettalkoholpropoxylate (p=0; q=1 bis 4) und Fettalkoholalkoxylate (p=1 bis 2; q=1 bis 4) zu nennen, wobei Ethoxylate primärer Alkohole bevorzugt sind. Die Fettalkoholalkoxylate sind beispielsweise durch Reaktion der entsprechenden Alkohole mit Ethylenoxid oder Propylenoxid zugänglich.

Als besonders vorteilhaft haben sich Additive des Typs m=0 erwiesen, die in Wasser und Schwefelsäure nicht oder nur schwer löslich sind.

Weiter bevorzugt sind Batterieseparatoren, die eine Verbindung gemäß der Formel (I) enthalten, in der

R    ein Alkanrest mit 20 bis 4200, vorzugsweise 50 bis 750 und ganz besonders bevorzugt 80 bis 225 Kohlenstoffatomen ist,

M    ein Alkali- oder Erdalkalimetallion, $H^+$ oder $NH_4^+$, insbesondere ein Alkalimetallion, wie $Li^+$, $Na^+$ und $K^+$, oder $H^+$ ist, wobei nicht alle Variablen M gleichzeitig die Bedeutung $H^+$ haben,

n    0 ist,

m    eine ganze Zahl von 10 bis 1400 ist und

x    1 oder 2 ist.

Hier sind als geeignete Additive insbesondere Polyacrylsäuren, Polymethacrylsäuren und Acrylsäure-Methacrylsäure-Copolymere zu nennen, deren Säuregruppen zumindest teilweise, d.h. vorzugsweise zu 40 %, besonders bevorzugt zu 80 % neutralisiert sind. Die Prozentangabe bezieht sich auf die Anzahl der Säuregruppen. Ganz besonders bevorzugt sind Poly(meth)acrylsäuren, die vollständig in der Salzform vorliegen. Unter Poly(meth)acrylsäuren werden Polyacrylsäuren, Polymethacrylsäuren und Acrylsäure-Methacrylsäure-Copolymere verstanden. Bevorzugt sind Poly(meth)acrylsäuren und insbesondere Polyacrylsäuren mit einer mittleren molaren Masse $M_w$ von 1.000 bis 100.000 g/mol, besonders bevorzugt 1.000 bis 15.000 g/mol und ganz besonders bevorzugt 1.000 bis 4.000 g/mol. Das Molekulargewicht der Poly(meth)acryl-säurepolymere und -copolymere wird durch die Bestimmung der Viskosität einer 1-%igen, mit Natronlauge neutralisierten, wäßrigen Lösung des Polymers ermittelt (Fikentsche Konstante).

Weiter geeignet sind Copolymere der (Meth)acrylsäure, insbesondere Copolymere, die neben (Meth)acrylsäure, Ethylen, Maleinsäure, Methylacrylat, Ethylacrylat, Butylacrylat und/oder Ethylhexylacrylat als Comonomer enthalten. Bevorzugt sind Copolymere, die mindestens 40,Gew.-%, vorzugsweise mindestens 80 Gew.-% des (Meth)acrylsäuremonomere enthalten, wobei die Prozentangaben auf der Säureform der Monmere bzw. Polymere basieren.

Zur Neutralisation der Polyacrylsäurepolymere und -copolymere eignen sich besonders Alkali- und Erdalkalimetallhydroxyde, wie Kaliumhydroxyd und insbesondere Natriumhydroxyd.

Erfindungsgemäß geeignete Additive sind bekannt und im Handel erhältlich.

Neben den genannten Additiven können die Separatoren alternativ oder zusätzlich Verbindungen enthalten, die die erfindungsgemäßen Additive bilden können. Bevorzugt sind solche Verbindungen, die beim bestimmungsgemäßen Gebrauch der Separatoren geeignete Additive freisetzen, beispielsweise bei der Hydrolyse durch die Batteriesäure. Besonders geeignete Substanzen dieses Typs sind Ester, die OH-gruppenhaltige Verbindungen der Formel (I) bilden. Hierzu zählen z.B. Phthalsäureester der oben genannten Alkohole.

Die Batterieseparatoren können auf verschiedene Weisen mit dem oder den Additiven versehen werden. Die Additive können z.B. auf den fertigen (d.h. nach der Extraktion) Separator aufgebracht oder der zur Herstellung des Separators verwendeten Mischung zugesetzt werden. Gemäß einer bevorzugten Ausführungsform wird das Additiv oder eine Lösung des Additivs auf die Oberfläche des Separators aufgetragen. Diese Variante eignet sich insbesondere zum Aufbringen von nicht hitzestabilen Additiven und Additiven, die in dem zur anschließenden Extraktion verwendeten Lösungsmittel löslich sind. Als Lösungsmittel für die erfindungsgemäßen Additive eignen sich besonders niedermolekulare Alkohole, wie Methanol und Ethanol, sowie Mischungen dieser Alkohole mit Wasser. Der Auftrag kann auf die der negativen Elektrode zugewandten Seite, die der positiven Elektrode zugewandten Seite oder auf beiden Seiten des Separators erfolgen. Bei einseitigem Auftrag ist ein Aufbringen auf die der positiven Elektrodenplatte zugewandten Seite des Separators bevorzugt.

Der Auftrag kann auch dadurch erfolgen, daß der Batterieseparator in das Additiv oder eine Lösung des Additivs eingetaucht und das Lösungsmittel gegebenenfalls anschließend entfernt wird, z.B. durch Trocknen. Auf diese Weise läßt sich das Aufbringen des Additivs z.B. mit der bei der Separatorherstellung häufig angewendeten Extraktion kombinieren.

Eine weitere bevorzugte Möglichkeit ist das Einmischen des oder der Additive in die zur Herstellung der Batterieseparatoren verwendete Mischung von thermoplastischem Polymer und gegebenenfalls Füllstoffen und anderen Zusatzstoffen. Die additivhaltige homogene Mischung wird anschließend zu einem bahnförmigen Material geformt. Da dies gewöhnlich durch Extrusion bei erhöhter Temperatur geschieht, eignen sich hierzu besonders schwer flüchtige und hitzestabile Additive, die in dem zur Extraktion verwendeten Lösungsmittel schwer löslich sind, wie Polyacrylsäurepolymere und -copolymere bzw. deren Salze.

Die Additive können allein oder als Mischung von zwei oder mehreren Additiven verwendet werden. Auch Mischungen von einem oder mehreren der erfindungsgemäßen Additive mit grenzflächenaktiven Stoffen, Entschäumern und anderen Zusatzstoffen können eingesetzt werden.

Die erfindungsgemäß verwendeten Additive werden vorzugsweise in einer Menge von 0,5 bis 5,0 Gew.-%, besonders bevorzugt 1.0 bis 5,0 Gew.-%, ganz besonders bevorzugt von 1,5 bis 4,0 Gew.-% und insbesondere von 2,0 bis 3,5 Gew.-%, bezogen auf die Masse des Separators nach der Extraktion, verwendet.

Die zur Herstellung der Separatoren verwendeten Additive weisen vorzugsweise einen hohen Siedepunkt auf. Als besonders geeignet haben sich Additive mit einem Siedepunkt von 250 °C oder mehr erwiesen.

Die erfindungsgemäß verwendeten Additive eignen sich zur Kombination mit allen Separatoren, die oxidativen Angriffen zugänglich sind, insbesondere zur Kombination mit Separatoren auf der Basis thermoplastischer Kunststoffe. Ganz besonders bevorzugt sind Separatoren, die neben thermoplastischem Kunstoff weiterhin Füllstoff und Öl enthalten.

Vorzugsweise werden die Additive mit Separatoren auf der Basis von Polyolefinen kombiniert, besonders bevorzugt füllstoffhaltigen Polyolefinen, die durch Heißverformung, wie Extrusion oder Pressen, und anschließende Extraktion herstellbar sind. Die Additive eignen sich jedoch auch zum Schutz von Separatoren, die Polyolefinfäden oder -fasern enthalten, z.B. Separatoren in Form von Vliesen.

Bevorzugte Polyolefine sind Polyethylene, wobei im Rahmen der Erfindung ultrahochmolekulares Polyethylen besonders bevorzugt ist. Ganz besonders bevorzugt ist ultrahochmolekulares Polyolefin mit einem mittleren gewichtsmäßigen Molekulargewicht von mindestens 300.000, vorzugsweise mindestens 1.0 x 10$^6$ und besonders bevorzugt mindestens 5.0 x 10$^6$ g/mol.

Das Molekulargewicht des Polyethylens wird mit der Margolies Gleichung bestimmt: M = 5,37 x 10$^4$ [η]$^{1,49}$; mit η= reduzierte spezifische Viskosität in dl/g (Josef Berzen, CZ Chemie-Technik, 3. Jahrgang (1974) Nr. 4, S. 129).

Geeignet sind aber auch Polypropylen, Polybuten, Polystyrol, Ethylen-Propylen-Copolymere, Ethylen-Hexylen-Copolymer, Ethylen-Buten-Copolymere, Propylen-Buten-Copolymere und Ethylen-Propylen-Buten-Copolymere.

Die erfindungsgemäßen Separatoren enthalten vorzugsweise 10 bis 100 Gew.-%, besonders bevorzugt 15 bis 50 Gew.-% und ganz besonders bevorzugt 20 bis 40 Gew.-% Polymer, insbesondere ultrahochmolekulares Polyethylen, bezogen auf die Summe der Massen von Füllstoff und Polymer.

Ein erfindungsgemäß bevorzugter Füllstoff ist SiO$_2$, ganz besonders bevorzugte Füllstoffe sind amorphe Fällungskieselsäuren. Als Füllstoffe eignen sich weiterhin Oxide und Hydroxide des Siliciums, Aluminiums und Titans sowie Glimmer, Talkum, Silikate und Glaskugeln. Füllstoffe diesen Typs werden beispielsweise in der US 3,351,495 und der DE 14 96 123 A offenbart.

Die erfindungsgemäßen Separatoren weisen vorzugsweise einen Füllstoffgehalt von 0 bis 90 Gew.-%, besonders bevorzugt 50 bis 85 Gew.-% und ganz besondes bevorzugt 60 bis 80 Gew.-% auf, bezogen auf die Summe der Massen an Füllstoff und Polymer, wobei als Füllstoff vorzugsweise ausschließlich Kieselsäure verwendet wird.

Das Gewichtsverhältnis von Füllstoff zu Polymer beträgt vorzugsweise 0 bis 9,0, besonders bevorzugt 1,0 bis 5,7 und ganz besonders bevorzugt 1,5 bis 4,0.

Als weitere Zusatzstoffe kommen insbesondere extrahierbare Öle zum Einsatz, die einerseits als Weichmacher und andererseits als Porenbildner dienen. Besonders geeignet sind die in der DE 12 67 423 A offenbarten Flüssigkeiten, wie z.B. Prozeßöle. Unter Ölen oder Prozeßölen werden vorzugsweise Mineralöle verstanden. Der Ölgehalt im Separator beträgt vorzugsweise 5 bis 35 Gew.-%, besonders bevorzugt 8 bis 30 Gew.-% und ganz besonders bevorzugt 10 bis 25 Gew.-% bezogen auf die Gesamtmasse des Separators nach der Extraktion.

Außer den zuvor genannten Hauptbestandteilen können die Separatoren weitere übliche Bestandteile wie Ruß, Antioxidantien, wie z.B. Alkyliden-Bisphenole, Gleitmittel, andere Füllstoffe wie z.B. Talkum usw. und gegebenenfalls auch andere Polymere in mehr oder weniger untergeordneter Menge enthalten. Ruß wird vorzugsweise in einer Menge von maximal 5 Gew.-%, die übrigen Zusatzstoffe vorzugsweise in einer Menge von maximal 2 Gew.% verwendet, jeweils bezogen auf die Gesamtmasse des fertigen Separators.

Zur Herstellung der Separatoren werden die genannten Materialien in üblicher Weise sorgfältig vermischt und dann unter Erwärmung zu einem bahnförmigen Material geformt. Aus diesem wird dann z.B. mit einem organischen Lösungsmittel, wie Hexan, das Öl so weit extrahiert, daß die gewünschte Porosität erzielt wird. Schließlich wird das Separatormaterial der gewünschten Anwendungsform entsprechend zugeschnitten, d.h. vorzugsweise auf die endgültige Breite geschnitten, zu Rollen von etwa 1000 Metern Länge aufgewickelt und verpackt. Die Oberflächen des Separators können glatt, gerippt oder in anderer Weise beliebig geformt sein. Die Zusammensetzung und Herstellung von Batterieseparatoren ist aus dem oben genannten Stand der Technik hinlänglich bekannt. Soweit die erfindungsgemäß verwendeten Additive in dem Extraktionsmittel löslich oder mit diesem extrahierbar sind, werden sie vorzugsweise nach dem Extraktionsschritt auf den Separator aufgetragen. Die Additive können aber auch dem Extraktionsmittel zugesetzt und so bei der Extraktion auf den Separator aufgebracht werden.

Angewendet werden die Separatoren meist in Form von Taschen, in welche die positiven oder negativen Elektrodenplatten eingesetzt werden. Die getaschten Elektrodenplatten werden dann mit entgegengesetzt geladenen, nicht getaschten Elektrodenplatten, zu Plattenblöcken zusammengefügt und in einen Blockkasten eingesetzt. Nach dem Füllen mit Schwefelsäure und dem Verschließen mit einem Blockdeckel ist der Bleiakkumulator vollständig.

Gegenstand der Erfindung sind auch Blei-Schwefelsäure-Akkumulatoren mit mindestens zwei entgegengesetzt geladenen Elektrodenplatten, die mindestens einen Batterieseparator mit einem der erfindungsgemäßen Additive enthalten.

Abgesehen von den erfindungsgemäß verwendeten Additiven handelt es sich bei den Akkumulatoren um übliche Blei/Schwefelsäure-Akkumulatoren mit herkömmlichen Elektroden und Schwefelsäure als Elektrolyt. Vorzugsweise handelt es sich um Starterbatterien für Kraftfahrzeuge. Das Gehäuse kann aus allen üblichen Materialien bestehen, z.B. Polypropylen, Hartgummi, Acrylglas, Polystyrol, Glas usw.

Im Folgenden wird die Erfindung anhand von Ausführungsbeispielen näher erläutert.

**Beispiele**

**Beispiele 1 - 7:**

**Verwendung von 1-Dodecanol als Additiv zur Verhinderung der vorzeitigen Oxidation von Batterieseparatoren**

In den Beispielen werden, wenn nicht anders angegeben Batterieseparatoren auf der Basis von Polyethylen (UHMWPE) und Fällungskieselsäure verwendet. Die Separatoren wurden gemäß der US 3,351,495 auf einem Extruder hergestellt und nach der Extrusion mit Hexan auf einen Ölgehalt im Grundblatt von ca. 12 Gew.-% extrahiert. Das eingesetzte Gewichtsverhältnis von Füllstoff zu Polymer ist in den jeweiligen Beispielen angegeben.

Zur Beurteilung der Wirksamkeit der Additive wurde ein standardisierter Oxidationstest verwendet (PEROX 80 Test), der weitgehend der von der BCI (Battery Council International) empfohlenen Methode zur Bestimmung der Oxidationsstabilität von Batterieseparatoren entspricht (TM-3.229: Standard test method to determine resistance of battery separator to oxidative degradation using hydrogen peroxide in sulfuric acid as oxidizing medium).

Hierzu wurden Probenkörper aus dem Separatormaterial bei 80 °C für unterschiedliche Zeiträume mit einer Mischung aus Schwefelsäure und Wasserstoffperoxid behandelt und die Dehnung des Materials vor und nach dem Test verglichen. Die Abnahme der Dehnbarkeit ist ein Maß für den Abbau und die Vernetzung, d.h. die oxidative Zerstörung des Polymers. Als Vergleich dienten Separatoren ohne erfindungsgemäße Additive, die unter identischen Bedingungen getestet wurden.

Die Probenkörper waren der DIN 53455 entsprechend hundeknochenförmig. Die Oxidationslösung wurde immer frisch zubereitet und bestand aus 360 ml Schwefelsäure der Dichte 1,28 g/cm$^3$, 35 ml Schwefelsäure der Dichte 1,84 g/cm$^3$ und 105 ml 35 %-iger Wasserstoffperoxidlösung. Die Komponenten wurden in der angegebenen Reihenfolge unter Rühren langsam miteinander gemischt und dann in einem verschlossenem Glasgefäß im Wasserbad auf 80 °C erwärmt. Es wurden jeweils zwei Probenhalter mit je fünf Probenkörpern in Lösung eingebracht und für die gewünschte Testdauer in der Lösung belassen. Anschließend wurden die Proben mit lauwarmen Wasser säurefrei gewaschen und die Dehnung gemessen. Hierzu wurden die Probenkörper mit einer Prüfgeschwindigkeit von 300 mm/min bis zum Zerreißen gestreckt. Es wurde die Dehnung quer zur Maschinenrichtung (cross machine direction, CMD) gemessen (CMD-Dehnung). In den folgenden Tabellen ist jeweils der Durchschnitt von zehn gemessenen Werten angegeben. Da die Anfangsdehnung der Separatoren aus Prozeßgründen schwanken kann, wurden die absoluten Dehnungen auf die Anfangsdehnung normiert:

$$\frac{\text{absolute Dehnung nach x h Perox Test in \%}}{\text{absolute Dehnung nach 0 h Perox Test in \%}} \text{ x 100 = relative Drehung nach x h Perox Test}$$

In den Beispielen 2 bis 7 wurden Separatorblätter der Größe 160 x 300 mm einseitig mit einer ethanolischen Lösung von 1-Dodecanol beschichtet, so daß sich nach dem Trocknen 0,7 bis 7,1 Gew.-% 1-Dodecanol auf dem Blatt befanden. In den Beispielen beziehen sich, wenn nicht anders angegeben, alle Gewichtsprozentangaben auf die Masse des Separators nach der Extraktion. Als Vergleich diente ein unbehandelter Separator (Beispiel 1). In den Beispielen 1 bis 7 betrug das Gewichtsverhältnis von Füllstoff zu Polymer jeweils 2,6.

Die mit dem Additiv bestrichenen Separatoren wurden dem oben beschriebenen Oxidationstest unterzogen. Die mit 1-Dodecanol beschichteten Separatoren zeigten nach Testende eine wesentliche höhere Restdehnung als der unbehandelte Separator (siehe Tabelle 1). Die in Tabelle 1 zusammengestellten Ergebnisse belegen, daß 1-Dodecanol auch unter extremen Testbedingungen (80 °C, $H_2O_2$) schon in geringen Konzentrationen eine verbesserten Schutz des Separators gegenüber oxidativer Zerstörung gewährleistet.

Tabelle 1

| Oxidationsbeständigkeit von Separatoren nach Behandlung mit 1-Dodecanol (Oxidationstest) | | | | | | | |
|---|---|---|---|---|---|---|---|
| | **Beispiel** | | | | | | |
| | **1*)** | **2** | **3** | **4** | **5** | **6** | **7** |
| Additivmenge [Gew.-%] | 0 | 0,7 | 1,4 | 2,1 | 2,8 | 3,5 | 7,1 |
| **Dauer des Oxidationstests** | **Absolute Dehnung [%]** | | | | | | |
| 0 h | 263 | 269 | 282 | 266 | 271 | 267 | 291 |
| 20 h | 152 | 186 | 234 | 235 | 233 | 252 | 272 |
| 40 h | 108 | 156 | 204 | 181 | 197 | 249 | 254 |
| 72 h | 0 | 46 | 82 | 112 | 135 | 234 | 247 |
| | **Relative Dehnung [%]** | | | | | | |
| 72 h | 0 | 17 | 29 | 42 | 50 | 88 | 85 |

*) Vergleichsbeispiel

**Beispiel 8:**

**Untersuchung von Separatoren mit 1-Dodecanol im Batterietest**

Analog zu den Beispielen 2 bis 7 wurden Separatoren mit 3,5 Gew.-% 1-Dodecanol beschichtet. Das Gewichtsverhältnis von Füllstoff zu Polymer betrug 2,2, der Ölgehalt 12 Gew.-%. Als Vergleich dienten unbehandelte Separatoren. Die Separatoren wurden in einer Blei/Schwefelsäurebatterie getestet. Hierzu wurden Batteriezellen aus antimonhaltigen positiven Platten und negativen Blei-Calcium-Platten (fünf positive und vier negative Platten pro Zelle) mit einer Gesamtkapazität von 36 Ah/Zelle zusammengesetzt. Drei Zellen waren mit den Dodecanol-beschichteten Separatoren ausgerüstet, die übrigen drei Zellen mit den unbehandelten Separatoren. Die Batterie wurde bei 50 °C einem verschärften Haltbarkeitstest gemäß DIN 43539 Teil 2 Entwurf 10/1980 unterworfen. Anschließend wurden die Zellen geöffnet und die Dehnung der Separatoren im Taschenbereich und in der Faltkante bestimmt.

Die Ergebnisse des Batterietests sind in Tabelle 2 zusammengestellt. Diese zeigen, daß das verwendete Additiv auch unter praxisnahen Bedingungen eine deutliche Verbesserung des Schutzes des Separators vor oxidativen Angriffen bietet.

Tabelle 2

| Oxidationsbeständigkeit von Separatoren nach Behandlung mit 1-Dodecanol (Batterietest) | | | | |
|---|---|---|---|---|
| | Separator ohne Additiv*) | | Separator mit 3,5 Gew.-% 1-Dodecanol | |
| | vor Test | nach Test | vor Test | nach Test |
| Meßstelle | Absolute Dehnung [%]**) | | | |
| im Taschenbereich | 493 ± 42 | 357 ± 46 | 513 ± 39 | 551 ± 49 |
| in der Faltkante | 493 ± 42 | 316 ± 24 | 513 ± 39 | 429 ± 33 |
| | Relative CMD Dehnung**) | | | |
| im Taschenbereich | 100 % | 72 % | 100 % | 107 % |
| in der Faltkante | 100 % | 64 % | 100 % | 84 % |

*) Vergleich

**) gemessen nach 264 Testzyclen

**Beispiele 9 - 11:**

**Verwendung von Fettalkoholen als Additive zur Verhinderung der vorzeitigen Oxidation von Batterieseparatoren**

Analog zu den Beispielen 1 bis 7 wurden Separatoren mit alkoholischen Lösungen von 1-Tetradecanol, 1-Hexadecanol und 1-Octadecanol einseitig beschichtet. Nach dem Trocknen befand sich jeweils eine Menge von 3,5 Gew.-% des Additivs auf dem Separator. Die Separatoren wurden dem bei den Beispielen 1 bis 7 beschriebenen Oxidationstest unterworfen. Die Ergebnisse sind in Tabelle 3 zusammengestellt.

Separatoren, welche mit höhermolekularen Fettalkoholen beschichtet sind, zeigen im Vergleich zu dem unbehandelten Separator (Beispiel 1) ebenfalls eine deutlich verbesserte Oxidationsstabilität.

Tabelle 3

| Oxidationsbeständigkeit von Separatoren nach Behandlung mit Fettalkoholen (Oxidationstest) | | | | |
|---|---|---|---|---|
| | Beispiel | | | |
| | 6 | 9 | 10 | 11 |
| Additiv | 1-Dodecanol | 1-Tetradecanol | 1-Hexadecanol | 1-Octadecanol |
| Additivmenge [Gew.-%] | 3,5 | 3,5 | 3,5 | 3,5 |
| Dauer des Oxidationstests | Absolute Dehnung [%] | | | |
| 0 h | 267 | 271 | 271 | 268 |
| 20 h | 252 | 265 | 274 | 265 |
| 40 h | 249 | 238 | 240 | 238 |
| 72 h | 234 | 212 | 218 | 201 |
| | Relative Dehnung [%] | | | |
| 72 h | 88 | 78 | 80 | 75 |

**Beispiele 12 - 14:**

**Vergleich der antioxidativen Wirkung von Prozeßöl und Dodecanol**

Aus dem Stand der Technik ist es bekannt, daß sich die Oxidationsbeständigkeit von Separatoren durch eine Erhöhung des Gehalts an Prozeßöl verbessern läßt. In einem Vergleichsversuch wurde der Einfluß des Ölgehalts auf die Oxidationsstabilität mit der Wirkung einer gleichen Menge eines erfindungsgemäßen Additivs (1-Dodecanol) verglichen. Die Ergebnisse sind in Tabelle 4 gezeigt. Es ist zu erkennen, daß das erfindungsgemäße Additiv eine sehr viel deutlichere Verbesserung der Oxidationsbeständigkeit ergibt. Herstellung der Separatoren und Durchführung des Tests erfolgten wie bei den Beispielen 1 bis 7 beschrieben. Das Gewichtsverhältnis von Füllstoff zu Polymer betrug 2,4. Das Öl wurde jeweils bis zu dem in der Tabelle angegebenen Gehalt extrahiert.

Tabelle 4

| Oxidationsbeständigkeit von Separatoren nach Behandlung mit 1-Dodecanol und Erhöhung des Ölgehalts (Oxidationstest) | | | |
|---|---|---|---|
| **Beispiel** | **12*)** | **13*)** | **14** |
| Additiv | ohne | ohne | 1-Dodecanol (3,5 Gew.-%) |
| Olgehalt [Gew.-%] | 12.4 | 15.4 | 11.2 |
| **Dauer des Oxidationstests** | **Absolute Dehnung [%]** | | |
| 0 h | 407 | 431 | 419 |
| 20 h | 313 | 370 | 406 |
| 40 h | 218 | 346 | 388 |
| 72 h | 99 | 204 | 326 |
| 96 h | 0 | 77 | 218 |
| | **Relative Dehnung [%]** | | |
| 96 h | 0 | 18 | 52 |

*) Vergleichsbeispiel

**Beispiele 15 - 18:**

**Verwendung von alkoxylierten Alkoholen als Additive zur Verhinderung der vorzeitigen Oxidation von Batterieseparatoren**

Analog zu den Beispielen 1 bis 7 wurden Separatoren mit alkoxylierten Alkoholen behandelt und anschließend dem Oxidationstest unterworfen. Das Gewichtsverhältnis von Füllstoff zu Polymer betrug 2,6. Es wurden Verbindungen der allgemeinen Formel $R^2\text{-}(OC_2H_4)_p\text{-}OH$ untersucht, wobei $R^2$ und $p$ die in der Tabelle 5 angegebene Bedeutung haben. Die in Tabelle 5 zusammengestellten Ergebnisse zeigen, daß die Additionsprodukte von Ethylenoxid an langkettige Alkohole die Oxidationsbeständigkeit von Batterieseparatoren deutlich verbessern können.

Tabelle 5

| Oxidationsbeständigkeit von Separatoren nach Behandlung mit Fettalkoholethoxylaten (Oxidationstest) | | | | | | |
|---|---|---|---|---|---|---|
| | Beispiel | | | | | |
| | 1*) | 6 | 15 | 16 | 17 | 18 |
| | Additiv: $R^2$-$(OC_2H_4)_p$-OH | | | | | |
| $R^2$ | $C_{12}$ | $C_{12}$ | $C_{12}$ | $C_{16/18}$ | $C_{16/18}$ | $C_{16/18}$ |
| p | - | - | 2 | 2 | 5 | 11 |
| Additivmenge [Gew.-%] | 0 | 3,5 | 3,5 | 3,5 | 3,5 | 3,5 |
| **Dauer des Oxidationstests** | Absolute Dehnung [%] | | | | | |
| 0 h | 263 | 267 | 281 | 292 | 279 | 284 |
| 20 h | 152 | 252 | 246 | 242 | 279 | 257 |
| 40 h | 108 | 249 | 224 | 260 | 227 | 234 |
| 72 h | 0 | 234 | 145 | 212 | 159 | 84 |
| | Relative Dehnung [%] | | | | | |
| 72 h | 0 | 88 | 52 | 73 | 57 | 30 |

*) Vergleichsbeispiel

**Beispiel 19:**

**Verwendung von Phthalsäureestern als Additive zur Verhinderung der vorzeitigen Oxidation von Batterieseparatoren**

Analog zu den Beispielen 1 bis 7 wurden Separatoren hergestellt und deren Ölgehalt durch Extraktion mit Hexan auf 12 Gew.-% eingestellt. Das Gewichtsverhältnis von Füllstoff zu Polymer betrug 2,2. Abweichend zu den Beispielen 1 bis 7 wurde dem Hexanbad zur Behandlung der erfindungsgemäßen Separatoren jedoch 1 bzw. 2 Gew.-% Stearylphthalat zugesetzt. Die Separatoren wurden im Anschluß an die Extraktion aus dem Bad entfernt und nach dem Abtropfen bei Zimmertemperatur getrocknet. Nach dem Trocknen enthielten die Separatoren 1 bzw. 2 Gew.-% Stearylphthalat. Gemäß Tabelle 6 wird durch Stearylphthalat ein wirksamer Schutz des Separators gegen vorzeitige Oxidation erzielt. Stearylphthalat wird durch die Batteriesäure zu Phthalsäure und Octadecanol, einem erfindungsgemäß geeigneten Additiv, gespalten.

Tabelle 6

| Oxidationsbeständigkeit von Separatoren nach Behandlung mit Stearylphthalat (Oxidationstest) | | | |
|---|---|---|---|
| **Additiv** | **ohne** | **Stearylphthalat** | |
| | | 1 Gew.-% | 2 Gew.-% |
| **Dauer des Oxidationstests** | Absolute Dehnung | | |
| 0 h | 498 | 498 | 512 |
| 72 h | 78 | 211 | 251 |
| | Relative Dehnung | | |
| 72 h | 16 | 42 | 49 |

**Beispiel 20 - 26:**

**Verwendung von Polyacrylaten als Additive zur Verhinderung der vorzeitigen Oxidation von Batterieseparatoren**

Auf der Basis von Polyethylen (UHMWPE) und amorphem Siliciumdioxid wurden analog zu den Beispielen 1 bis 7 Batterieseparatoren mit einem Gewichtsverhältnis von Füllstoff zu Polymer von 2,2 hergestellt. Anders als bei den Beispielen 1 bis 7 wurde dem Separatormaterial vor der Extrusion jedoch Polyacrylsäure bzw. das Natriumsalz der Polyacrylsäure zugesetzt, die nach der Extraktion im Separator vorhandenen Mengen an Polyacrylsäure sind in Tabelle 7 angegeben. Anschließend wurden die Separatoren dem Oxidationstest unterworfen. Die in Tabelle 7 zusammengefaßten Ergebnisse zeigen, daß Salze der Polyacrylsäure einen wirksamen Schutz der Separatoren vor vorzeitiger Oxidation ermöglichen. Im Gegensatz dazu war freie Polyacrylsäure praktisch wirkungslos. Die Ergebnisse zeigen auch, daß Polyacrylsäuren bei der Extraktion nicht aus dem Separator ausgewaschen werden.

Tabelle 7

| Oxidationsbeständigkeit von Separatoren mit Polyacrylsäure (Oxidationstest) | | | | | | | |
|---|---|---|---|---|---|---|---|
| **Beispiel** | **20*)** | **21** | **22** | **23** | **24** | **25** | **26*)** |
| Additiv | ohne | Polyacrylsäure | | | | | |
| Mittleres Molekulargewicht [g/mol] | -- | 1.200 | 4.000 | 8.000 | 15.000 | 30.000 | 100.000 |
| Form | -- | Salz**) | Salz**) | Salz**) | Salz**) | Salz**) | Säure |
| K-Wert***) | -- | 15 | 25 | 30 | 40 | 50 | 80 |
| Konzentration [Gew.-%] | -- | 2.0 | 2.0 | 2.0 | 2.0 | 2.0 | 2.0 |
| **Dauer des Oxidationstests** | **Absolute Dehnung [%]** | | | | | | |
| 0 h | 508 | 522 | 468 | 530 | 499 | 504 | 447 |
| 20 h | 420 | 446 | 413 | 410 | 456 | 485 | 418 |
| 40 h | 303 | 427 | 394 | 413 | 450 | 457 | 211 |
| 72 h | 21 | 333 | 273 | 240 | 244 | 224 | 16 |
| | **Relative Dehnung [%]** | | | | | | |
| 72 h | 4 | 64 | 58 | 45 | 49 | 44 | 4 |

*) Vergleichsbeispiel

**) es wurde das Na-Salz der Polyacrylsäure verwendet (vollständig neutralisierte Form)

***) Fikentsche Konstante, gemessen in einer 1-%igen, mit Natronlauge neutralisierten wäßrigen Lösung, Kenngröße zur Charakterisierung des Polymerisationsgrades und der molaren Masse

**Beispiel 27 - 28:**

**Verwendung von Polyacrylsäurecopolymeren als Additive zur Verhinderung der vorzeitigen Oxidation von Batterieseparatoren**

Analog zu den Beispielen 20 bis 26 wurden Separatoren hergestellt und getestet, die anstelle von Polyacrylsäure Polyacrylsäurecopolymere enthielten. In Beispiel 27 wurde das Polymer Sokolan CP 10, in Beispiel Sokolan CP 10 S verwendet (beide Fa. BASF, Ludwigshafen). Die Ergebnisse sind in Tabelle 8 gezeigt. Auch hier ergibt die Salzform der Polymere einen guten Oxidationsschutz während die Säureform praktisch wirkungslos ist.

Tabelle 8

| Oxidationsbeständigkeit von Separatoren mit Polyacrylsäurecopolymeren (Oxidationstest) | | |
|---|---|---|
| **Beispiel** | **23*)** | **27** | **28** |
| **Additiv** | ohne | **Polyacrylsäurecopolymer** | |
| Mittleres Molekulargewicht [g/mol] | -- | 4.000 | 4.000 |

*) Vergleichsbeispiel

Tabelle 8   (fortgesetzt)

| Oxidationsbeständigkeit von Separatoren mit Polyacrylsäurecopolymeren (Oxidationstest) | | | |
|---|---|---|---|
| **Beispiel** | **23*)** | **27** | **28** |
| **Additiv** | ohne | Polyacrylsäurecopolymer | |
| Form | -- | Salz**) | Säure |
| Konzentration [Gew.-%] | -- | 2,0 | 2,0 |
| **Dauer des Oxidationstests** | **Absolute Dehnung [%]** | | |
| 0 h | 508 | 521 | 556 |
| 20 h | 420 | 465 | 506 |
| 40 h | 303 | 433 | 375 |
| 72 h | 21 | 279 | 43 |
| | **Relative Dehnung [%]** | | |
| 72 h | 4 | 54 | 8 |

*) Vergleichsbeispiel

**) es wurde das Na-Salz der Polyacrylsäure verwendet (vollständig neutralisierte Form)

**Patentansprüche**

1. Batterieseparator auf Basis von thermoplastischem, ultrahochmolekularem Polyolefin mit einem mittleren gewichtsmäßigen Molekulargewicht von mindestens 300.000, **dadurch gekennzeichnet, daß** er bezogen auf die Summe der Massen von Füllstoff und Polyolefin 10 bis 100 Gew.-% Polyolefin und 0 bis 90 Gew.-% Füllstoff, und bezogen auf die Masse des Separators 5 bis 35 Gew.-% Öl und 0,5 bis 5,0 Gew.-% einer Verbindung gemäß der Formel (I)

$$R(OR^1)_n \, (COOM^{x+}_{1/x})_m \qquad\qquad (I)$$

enthält, in der

R    ein nicht-aromatischer Kohlenwasserstoffrest mit 10 bis 4200 Kohlenstoffatomen ist, der durch Sauerstoffatome unterbrochen sein kann,
$R^1$    H, $-(CH_2)_k COOM^{x+}_{1/x}$ oder $-(CH_2)_k$-$SO_3M^{x+}_{1/x}$ ist, wobei k 1 oder 2 ist,
M    ein Alkali- oder Erdalkalimetallion, $H^+$ oder $NH_4^+$ ist, wobei nicht alle Variablen M gleichzeitig die Bedeutung $H^+$ haben,
n    0 oder 1 ist,
m    0 oder eine ganze Zahl von 10 bis 1400 ist und
x    1 oder 2 ist,

wobei das Verhältnis von Sauerstoffatomen zu Kohlenstoffatomen in der Verbindung gemäß Formel (I) im Bereich von 1:1,5 bis 1:30 liegt und wobei n und m nicht gleichzeitig null sein können.

2. Batterieseparator nach Anspruch 1, **dadurch gekennzeichnet, daß** er eine Verbindung gemäß der Formel (I) enthält, in der

R    ein Kohlenwasserstoffrest mit 10 bis 180 Kohlenstoffatomen ist, der durch 1 bis 60 Sauerstoffatome unterbrochen sein kann,
n    1 ist,
m    0 ist und
x    1 oder 2 ist.

3. Batterieseparator nach Anspruch 2, **dadurch gekennzeichnet, daß** R ein Kohlenwasserstoffrest der Formel

$R^2$-[$(OC_2H_4)_p$ $(OC_3H_6)_q$]- ist, in der

R$^2$    ein Alkylrest mit 10 bis 30 Kohlenstoffatomen ist,
p       eine ganze Zahl von 0 bis 30 ist und/oder
q       eine ganze Zahl von 0 bis 30 ist.

**4.**  Batterieseparator nach Anspruch 3, **dadurch gekennzeichnet, daß**

p       eine ganze Zahl von 0 bis 10 ist und
q       eine ganze Zahl von 0 bis 10 ist.

**5.**  Batterieseparator nach Anspruch 3 oder 4, **dadurch gekennzeichnet, daß** die Summe von p und q kleiner oder gleich 10 ist.

**6.**  Batterieseparator nach einem der Ansprüche 2 bis 5, **dadurch gekennzeichnet, daß** R$^1$ H ist.

**7.**  Batterieseparator nach Anspruch 1, **dadurch gekennzeichnet, daß** er eine Verbindung gemäß der Formel (I) enthält, in der

R       ein Alkanrest mit 20 bis 4200 Kohlenstoffatomen ist,
M       ein Alkali- oder Erdalkalimetallion, $H^+$ oder $NH_4^+$ ist, wobei nicht alle Variablen M gleichzeitig die Bedeutung $H^+$ haben,
n       0 ist,
m       eine ganze Zahl von 10 bis 1400 ist und
x       1 oder 2 ist.

**8.**  Batterieseparator nach Anspruch 7, **dadurch gekennzeichnet, daß** R ein Alkanrest mit 50 bis 750 Kohlenstoffatomen ist.

**9.**  Batterieseparator nach Anspruch 7 oder 8, **dadurch gekennzeichnet, daß** die Verbindung gemäß Formel (I) eine Poly(meth)acrylsäure ist, deren Säuregruppen zumindest teilweise neutralisiert sind.

**10.** Batterieseparator nach Anspruch 9, **dadurch gekennzeichnet, daß** mindestens 40 % der Säuregruppen der Poly (meth)acrylsäure neutralisiert sind.

**11.** Batterieseparator nach einem der Ansprüche 7 bis 10, **dadurch gekennzeichnet, daß** M $Li^+$, $Na^+$ oder $K^+$ ist.

**12.** Batterieseparator nach einem der Ansprüche 7 bis 11 , **dadurch gekennzeichnet, daß** die Poly(meth)acrylsäure eine mittlere molare Masse $M_w$ von 1.000 bis 100.000 g/mol aufweist.

**13.** Batterieseparator auf Basis von thermoplastischem, ultrahochmolekularen Polyolefin mit einem mittleren gewichtsmäßigen Molekulargewicht von mindestens 300.000, **dadurch gekennzeichnet, daß** er eine Komponente enthält, die bei bestimmungsgemäßem Gebrauch des Separators eine verbindung der Formel (I)

$$R(OR^1)_n (COOM^{x+}_{1/x})_m \tag{I}$$

bilden kann, in der

R       ein nicht-aromatischer Kohlenwasserstoffrest mit 10 bis 4200 Kohlenstoffatomen ist, der durch Sauerstoffatome unterbrochen sein kann,
R$^1$    H, $-(CH_2)_k COOM^{x+}_{1/x}$ oder $-(CH_2)_k-SO_3M^{x+}_{1/x}$ ist, wobei k 1 oder 2 ist,
M       ein Alkali- oder Erdalkalimetallion, $H^+$ oder $NH_4^+$ ist, wobei nicht alle Variablen M gleichzeitig die Bedeutung $H^+$ haben,
n       0 oder 1 ist,
m       0 oder eine ganze Zahl von 10 bis 1400 ist und
x       1 oder 2 ist,

wobei das Verhältnis von Sauerstoffatomen zu Kohlenstoffatomen in der Verbindung gemäß Formel (I) im Bereich von 1:1,5 bis 1:30 liegt und wobei n und m nicht gleichzeitig null sein können.

14. Blei-Schwefelsäure-Akkumulator mit mindestens zwei entgegengesetzt geladenen Elektrodenplatten, **dadurch gekennzeichnet, daß** er mindestens einen Batterieseparator gemäß einem der Ansprüche 1 bis 13 enthält.

15. Verfahren zur Herstellung eines Batterieseparators gemäß einem der Ansprüche 1 bis 13, **dadurch gekennzeichnet, daß** man auf einen Batterieseparator eine Verbindung mit der Formel (I) oder eine Lösung einer Verbindung mit der Formel (I) aufbringt und man den Separator anschließend gegebenenfalls trocknet.

16. Verfahren zur Herstellung eines Batterieseparators gemäß einem der Ansprüche 1 bis 13, **dadurch gekennzeichnet, daß** man eine homogene Mischung von ultrahochmolekularem, thermoplastischem Polyolefin, mindestens einer Verbindung mit der Formel (I) und gegebenenfalls Füllstoff und weiteren Zusatzstoffen herstellt, diese zu einem bahnförmigen Material formt und man gegebenenfalls anschließend einen oder mehrere der weiteren Zusatzstoffe entfernt.

17. Verwendung einer Verbindung mit der Formel (I) zur Herstellung von Batterieseparatoren.

18. Verwendung einer Verbindung mit der Formel (I) zur Verbesserung der Oxidationsbeständigkeit von Batterieseparatoren.

**Claims**

1. Battery separator based on thermoplastic, ultra-high molecular-weight polyolefin with an average molecular weight by weight of at least 300 000, **characterized in that** it contains, relative to the sum of the weights of filler and polyolefin, 10 to 100 wt.% polyolefin and 0 to 90 wt.% filler, and, relative to the weight of the separator, 5 to 35 wt.% oil and 0.5 to 5.0 wt.% of a compound according to the Formula (I)

$$R(OR^1)_n (COOM^{x+}_{1/x})_m \qquad (I)$$

in which

R is a non-aromatic hydrocarbon radical with 10 to 4 200 carbon atoms, which can be interrupted by oxygen atoms,
$R^1$ is H, $-(CH_2)_k COOM^{x+}_{1/x}$ or $-(CH_2)_k-SO_3M^{x+})_{1/x}$, where k is 1 or 2,
M is an alkali metal or alkaline-earth metal ion, $H^+$ or $NH_4^+$, where not all the M variables simultaneously have the meaning $H^+$,
n is 0 or 1,
m is 0 or an integer from 10 to 1 400 and
x is 1 or 2,

the ratio of oxygen atoms to carbon atoms in the compound according to Formula (I) lying in the range between 1:1.5 to 1:30 and m and n not being able to simultaneously be 0.

2. Battery separator according to Claim 1, **characterized in that** it contains a compound according to Formula (I) in which

R is a hydrocarbon radical with 10 to 180 carbon atoms, which can be interrupted by 1 to 60 oxygen atoms,
n is 1,
m is 0 and
x is 1 or 2.

3. Battery separator according to Claim 2, **characterized in that** R is a hydrocarbon radical of the Formula $R^2-[(OC_2H_4)_p (OC_3H_6)_q]-$, in which

$R^2$    is an alkyl radical with 10 to 30 carbon atoms,
p    is an integer from 0 to 30 and/or
q    is an integer from 0 to 30.

4. Battery separator according to Claim 3, **characterized in that**

p    is an integer from 0 to 10 and
q    is an integer from 0 to 10.

5. Battery separator according to Claim 3 or 4, **characterized in that** the sum of p and q is smaller than or equal to 10.

6. Battery separator according to one of Claims 2 to 5, **characterized in that** $R^1$ is H.

7. Battery separator according to Claim 1, **characterized in that** it contains a compound according to Formula (I), in which

R    is an alkane radical with 20 to 4 200 carbon atoms,
M    is an alkali metal or alkaline-earth metal ion, $H^+$ or $NH_4^+$, where not all the variables M simultaneously have the meaning $H^+$,
n    is 0,
m    is an integer from 10 to 1 400 and
x    is 1 or 2.

8. Battery separator according to Claim 7, **characterized in that** R is an alkane radical with 50 to 750 carbon atoms.

9. Battery separator according to Claim 7 or 8, **characterized in that** the compound according to Formula (I) is a poly(meth)acrylic acid, whose acid groups are at least partly neutralized.

10. Battery separator according to Claim 9, **characterized in that** at least 40% of the acid groups of the poly(meth)acrylic acid are neutralized.

11. Battery separator according to one of Claims 7 to 10, **characterized in that** M is $Li^+$, $Na^+$ or $K^+$.

12. Battery separator according to one of Claims 7 to 11, **characterized in that** the poly(meth)acrylic acid has an average molar mass $M_w$ of 1 000 to 100 000 g/mol.

13. Battery separator based on thermoplastic, ultra-high molecular-weight polyolefin with an average molecular weight by weight of at least 300 000, **characterized in that** it contains a component which can form when the separator is used for the intended purpose, a compound of the formula (I).

$$R(OR^1)_n \, (COOM^{x+}_{1/x})_m \tag{I}$$

in which

R    is a non-aromatic hydrocarbon radical with 10 to 4 200 carbon atoms, which can be interrupted by oxygen atoms,
$R^1$    is H, $-(CH_2)_k COOM^{x+}_{1/x}$ or $-(CH_2)_k-SO_3M^{x+})_{1/x}$, where k is 1 or 2,
M    is an alkali metal or alkaline-earth metal ion, $H^+$ or $NH_4^+$, where not all the M variables simultaneously have the meaning $H^+$,
n    is 0 or 1,
m    is 0 or an integer from 10 to 1 400 and
x    is 1 or 2,

the ratio of oxygen atoms to carbon atoms in the compound according to Formula (I) lying in the range between 1:1.5 to 1:30 and m and n not being able to simultaneously be 0.

**14.** Lead-sulphuric acid accumulator with at least two oppositely-charged electrode plates, **characterized in that** it contains at least one battery separator according to one of Claims 1 to 13.

**15.** Process for the preparation of a battery separator according to one of Claims 1 to 13, **characterized in that** a compound with the Formula (I) or a solution of a compound with the Formula (I) is applied to a battery separator and the separator is then optionally dried.

**16.** Process for the preparation of a battery separator according to one of Claims 1 to 13, **characterized in that** a homogeneous mixture of ultra-high molecular-weight, thermoplastic polyolefin, at least one compound with the Formula (I) and optionally filler and further additives is prepared, formed into a web-shaped material and then one or more of the further additives are optionally removed.

**17.** Use of a compound with the Formula (I) for the preparation of battery separators.

**18.** Use of a compound with the Formula (I) for the improvement of the oxidation resistance of battery separators.


**Revendications**

**1.** Séparateur de batterie à base de polyoléfine thermoplastique à très haut poids moléculaire d'un poids moléculaire moyen pondéral d'au moins 300.000, **caractérisé en ce qu'**il contient, rapporté à la somme des masses de la charge et de la polyoléfine, 10 à 100 % en poids de polyoléfine, 0 à 90 % en poids de charge et, rapporté à la masse du séparateur, 5 à 35 % en poids d'huile et 0,5 à 5,0 % en poids d'un composé de la formule (I)

$$R(OR^1)_n(COOM^{x+}_{1/x})_m \tag{I}$$

dans laquelle

R est un radical hydrocarbure non aromatique avec 10 à 4200 atomes de carbone, qui peut être interrompu par des atomes d'oxygène,
$R^1$ est H, $-(CH_2)_kCOOM^{x+}_{1/x}$ ou $-(CH_2)_kSO_3M^{x+}_{1/x}$, k étant 1 ou 2,
M est un ion métallique alcalin ou alcalino-terreux, $H^+$ ou $NH_4^+$, sachant que toutes les variables M n'ont pas en même temps la signification $H^+$,
n est 0 ou 1
m est 0 ou un nombre entier de 10 à 1400 et
x est 1 ou 2,

étant entendu que le rapport des atomes d'oxygène aux atomes de carbone dans le composé de formule (I) se trouve dans l'intervalle de 1 : 1,5 à 1 : 30 et que n et m ne valent pas tous deux 0 en même temps.

**2.** Séparateur de batterie selon la revendication 1, **caractérisé en ce qu'**il contient un composé de la formule (I), dans laquelle

R est un radical hydrocarbure avec 10 à 180 atomes de carbone, qui peut être interrompu par 1 à 60 atomes d'oxygène,
n est 1
m est 0 et
x est 1 ou 2.

**3.** Séparateur de batterie selon la revendication 2, **caractérisé en ce que** R est un radical hydrocarbure de formule $R^2-[(OC_2H_4)_p(OC_3F_6)_q]-$, dans laquelle

$R^2$ est un radical alkyle avec 10 à 30 atomes de carbone,
p est un nombre entier de 0 à 30 et/ou
q est un nombre entier de 0 à 30.

**4.** Séparateur de batterie selon la revendication 3, **caractérisé en ce que**

p    est un nombre entier de 0 à 10 et
q    est un nombre entier de 0 à 10.

**5.** Séparateur de batterie selon la revendication 3 ou 4, **caractérisé en ce que** la somme de p et q est inférieure ou égale à 10.

**6.** Séparateur de batterie selon l'une des revendications 2 à 5, **caractérisé en ce que** $R^2$ est H.

**7.** Séparateur de batterie selon la revendication 1, **caractérisé en ce qu'**il contient un composé de la formule (I), dans laquelle

R    est un radical alcane avec 20 à 4200 atomes de carbone,
M    est un ion métallique alcalin ou alcalino-terreux, $H^+$ ou $NH_4^+$, sachant toutes les variables M ne peuvent pas avoir en même temps la signification $H^+$,
n    est 0
m    est un nombre entier de 10 à 1400 et
x    est 1 ou 2.

**8.** Séparateur de batterie selon la revendication 7, **caractérisé en ce que** R est un radical alcane avec 50 à 750 atomes de carbone.

**9.** Séparateur de batterie selon la revendication 7 ou 8, **caractérisé en ce que** le composé de formule (I) est un acide poly(méth)acrylique dont les groupes acides sont au moins partiellement neutralisés.

**10.** Séparateur de batterie selon la revendication 9, **caractérisé en ce qu'**au moins 40 % des groupes acides de l'acide poly(méth)acrylique sont neutralisés.

**11.** Séparateur de batterie selon l'une des revendications 7 à 10, **caractérisé en ce que** M est $Li^+$, $Na^+$ ou $K^+$.

**12.** Séparateur de batterie selon l'une des revendications 7 à 11, **caractérisé en ce que** l'acide poly(méth)acrylique a une masse molaire moyenne $M_w$ de 1.000 à 100.000 g/mol.

**13.** Séparateur de batterie à base de polyoléfine thermoplastique à très haut poids moléculaire d'un poids moléculaire moyen pondéral d'au moins 300.000, **caractérisé en ce qu'**il contient un composant qui, lors de l'emploi du séparateur conforme à sa destination, peut former un composé de formule (I)

$$R(OR^1)_n(COOM^{x+}_{1/x})_m \qquad\qquad (I)$$

dans laquelle

R    est un radical hydrocarbure non aromatique avec 10 à 4200 atomes de carbone, qui peut être interrompu par des atomes d'oxygène,
$R^1$   est H, $-(CH_2)_kCOOM^{x+}_{1/x}$ ou $-(CH_2)_kSO_3M^{x+}_{1/x}$, k étant 1 ou 2,
M    est un ion métallique alcalin ou alcalino-terreux, $H^+$ ou $NH_4^+$, sachant que toutes les variables M n'ont pas en même temps la signification $H^+$,
n    est 0 ou 1
m    est 0 ou un nombre entier de 10 à 1400 et
x    est 1 ou 2,

étant entendu que le rapport des atomes d'oxygène aux atomes de carbone dans le composé de formule (I) se trouve dans l'intervalle de 1 : 1,5 à 1 : 30 et que n et m ne valent pas tous deux 0 en même temps.

**14.** Accumulateur au plomb-acide sulfurique avec au moins deux plaques d'électrode à charge opposée, **caractérisé en ce qu'**il contient au moins un séparateur de batterie selon l'une des revendications 1 à 13.

**15.** Procédé de fabrication d'un séparateur de batterie selon l'une des revendications 1 à 13, **caractérisé en ce qu'**on dépose sur un séparateur de batterie un composé de formule (I) ou une solution d'un composé de formule (I) et que l'on sèche ensuite le séparateur le cas échéant.

**16.** Procédé de fabrication d'un séparateur de batterie selon l'une des revendications 1 à 13, **caractérisé en ce qu'**on prépare un mélange homogène d'une polyoléfine thermoplastique à très haut poids moléculaire, d'au moins un composé de formule (I) et, le cas échéant, d'une charge et d'autres substances additionnelles, que l'on met celui-ci en forme en un matériau en forme de bande et que l'on élimine ensuite le cas échéant une ou plusieurs des autres substances additionnelles.

**17.** Utilisation d'un composé de formule (I) pour la fabrication de séparateurs de batterie.

**18.** Utilisation d'un composé de formule (I) pour l'amélioration de la stabilité à l'oxydation des séparateurs de batterie.